# EUROPEAN PATENT APPLICATION

(11) **EP 1 816 806 A1**
(43) Date of publication of application: **08.08.2007**
(21) Application number: 07002527.5
(22) Date of filing: 06.02.2007
(51) Int. Cl.: H04L 12/56

(54) **Method of resetting radio link control entity in a mobile communications system and related apparatus**

(30) Priority: 06.02.2006 US 766677 P
(71) Applicant: Innovative Sonic Limited, Tortola (VG)
(72) Inventor: Jiang, Sam Shiaw-Shiang, Taipei City (TW)
(74) Representative: Weber, Joachim

(57) **Abstract**

A method of resetting a radio link control entity (306) in a receiver of a wireless communications system includes receiving a reset protocol data unit (RESET PDU) (402), and not resetting a radio link control (RLC) entity if a reset sequence number (RSN) value in the RESET PDU is the same as an RSN value in a last received RESET PDU and if the RESET PDU is not the first RESET PDU received since the RLC entity was established or re-established (404).

## Description

This application claims the benefit of the filing date of U.S. Provisional Patent Application No. 60/766,677, filed on Feb. 6, 2006, the contents of which are hereby incorporated by reference.

The present invention relates to a method of resetting a radio link control entity in a mobile communications system and related communications device according to the pre-characterizing clauses of claims 1 and 2.

In Acknowledged Mode and Unacknowledged Mode, a radio link control (RLC) layer can execute an RLC Re-establishment Function to reset specific state variables, set configurable protocol parameters to correct values, set a Hyper Frame Number (HFN) to a value set by an upper layer, and discard specific protocol data units (PDU), e.g. control PDUs and data PDUs, in order to re-establish the RLC layer. Further, to ensure data accuracy, in AM, when the RLC entity of a transmitting side detects a protocol error, the transmitting side can output a RESET PDU for initiating a reset process to reset protocol states, variables, and clocks, in order to recover from the protocol error. Analogously, after a receiving side receives the RESET PDU from the transmitting side, the receiving side sends an acknowledgement PDU (RESET ACK PDU) to the transmitting side, and performs corresponding reset operations.

In the receiving end, if a reset sequence number of the RESET PDU received is equal to the RSN of the RESET PDU most recently received, the receiving end will only respond with a RESET ACK PDU, and will not perform a corresponding reset operation. Further, the content of the RESET ACK PDU is equal to the content of the RESET ACK PDU most recently transmitted. If the RESET PDU received by the receiving end is the first RESET PDU received since the RLC entity was last established or re-established, or if the RSN of the RESET PDU received is different from the RSN of the most recently received RESET PDU, the receiving end responds with a RESET ACK PDU to the transmitting end, and performs operations corresponding to resetting the RLC entity, e.g. resetting protocol states, variables, and clocks. In addition, in the transmitting end, when a RESET ACK PDU is received, but the transmitting end has not yet outputted a RESET PDU corresponding to the RESET ACK PDU, the transmitting end will discard the RESET ACK PDU. Thus, the prior art can process RESET PDUs and RESET ACK PDUs in the receiving end and the transmitting end, such that the RLC Reset process can execute smoothly. However, if the RLC Reset process is executed following re-establishment of the RLC entity, the RLC Reset process cannot operate effectively.

This in mind, the present invention aims at providing a method of resetting a radio link control entity in a mobile communications system and related communications device that prevents loss of synchronization of Hyper Field Numbers of a receiving end and a transmitting end, and ensures effective operation of the RLC Reset procedure.

This is achieved by a method of resetting a radio link control entity in a mobile communications system and related communications device according to claims 1 and 2. The dependent claims pertain to corresponding further developments and improvements.

As will be seen more clearly from the detailed description following below, the claimed resetting a radio link control entity in a mobile communications system and related communications device includes not resetting a radio link control (RLC) entity when a reset sequence number (RSN) of the first RESET PDU is the same as an RSN of a last received second RESET PDU and the first RESET PDU is not a first RESET PDU received after establishing or re-establishing the RLC entity.

In the following, the invention is further illustrated by way of example, taking reference to the accompanying drawings. Thereof
Fig. 1 is a diagram of processing a RESET PDU and a RESET ACK PDU in a user end and a network end according to the prior art,
Fig. 2 is a functional block diagram of a communications device according to the present invention,
Fig. 3 is a diagram of program code of Fig. 2,
Fig. 4 is a flowchart of a method of resetting a radio link control according to the present invention, and
Fig. 5 is a diagram of processing a RESET PDU and a RESET ACK PDU in a user end and a network end according to the method of Fig. 4.

The third generation (3G) mobile communications system has adopted a Wideband Code Division Multiple Access (WCDMA) wireless air interface access method for a cellular network. WCDMA can provide high frequency spectrum utilization, universal coverage, and high quality, high speed multimedia data transmission. The WCDMA method also meets all kinds of QoS requirements simultaneously, providing diverse flexible two-way transmission services and better communication quality to reduce transmission interruption rates.

Taking a signal communications protocol standard set forth by the 3rd Generation Partnership Project (3GPP) as an example, targeting the Access Stratum (AS), the 3G mobile communications system defines various protocol stacks, such as Radio Resource Control (RRC), Radio Link Control (RLC), Media Access Control (MAC), Packet Data Convergence Protocol (PDCP), and Broadcast/Multicast Control (BMC). In addition, the 3G mobile communications system also provides different levels of transmission quality, and can operate in different corresponding modes according to different transmission quality requirements, such as: Transparent Mode (TM), Unacknowledged Mode (UM), and Acknowledged Mode (AM). TM is appropriate for use in services with high requirements for real-time transmission, UM is appropriate for use in services with requirements for real-time transmission and packet sequencing, and AM is appropriate for use in services with low requirements for real-time transmission, but high requirements for data accuracy.

RESET PDUs and RESET ACK PDUs are Control PDUs, and have a packet architecture defined in Section 9.2.1.7 of the RLC communications protocol standard 3GPP TS 25.322 V6.6.0 set forth by the 3GPP, so further description thereof is omitted for brevity. The RESET PDU and the RESET ACK PDU both comprise a reset sequence number (RSN) field, and an HFN indicator (HFNI) field. The HFNI field is 20 bits long, and is used for indicating the HFN to synchronize the respective HFNs of the receiving side and the transmitting side. The RSN field is used for indicating the RSN of the RESET PDU it belongs to, is 1 bit long, and is initially set to 0. The RSN of newly transmitted RESET PDUs is equal to the RSN of the preceding RESET PDU plus one, and the RSN of the retransmitted RESET PDU is equal to the RSN of the original RESET PDU. When the RLC entity is re-established, the RSN is also reset starting from the initial value, and when the RLC entity is reset, the RSN is not reset.

Sections 11.4.3 and 11.4.4 of the above-mentioned communications protocol standard can be referred to regarding operations following reception of the RESET PDU by the receiving end and reception of the RESET ACK PDU by the transmitting end. The following is a summary of said sections. In the receiving end, if the RSN of the RESET PDU received is equal to the RSN of the RESET PDU most recently received, the receiving end will only respond with a RESET ACK PDU, and will not perform a corresponding reset operation. Further, the content of the RESET ACK PDU is equal to the content of the RESET ACK PDU most recently transmitted. If the RESET PDU received by the receiving end is the first RESET PDU received since the RLC entity was last established or re-established, or if the RSN of the RESET PDU received is different from the RSN of the most recently received RESET PDU, the receiving end responds with a RESET ACK PDU to the transmitting end, and performs operations corresponding to resetting the RLC entity, e.g. resetting protocol states, variables, and clocks (please refer to Section 11.4.3 of the above-mentioned standard for further explanation). In addition, in the transmitting end, when a RESET ACK PDU is received, but the transmitting end has not yet outputted a RESET PDU corresponding to the RESET ACK PDU, the transmitting end will discard the RESET ACK PDU.

From the above description, the prior art can process RESET PDUs and RESET ACK PDUs in the receiving end and the transmitting end, such that the RLC Reset process can execute smoothly. However, if the RLC Reset process is executed following re-establishment of the RLC entity, the RLC Reset process cannot operate effectively.

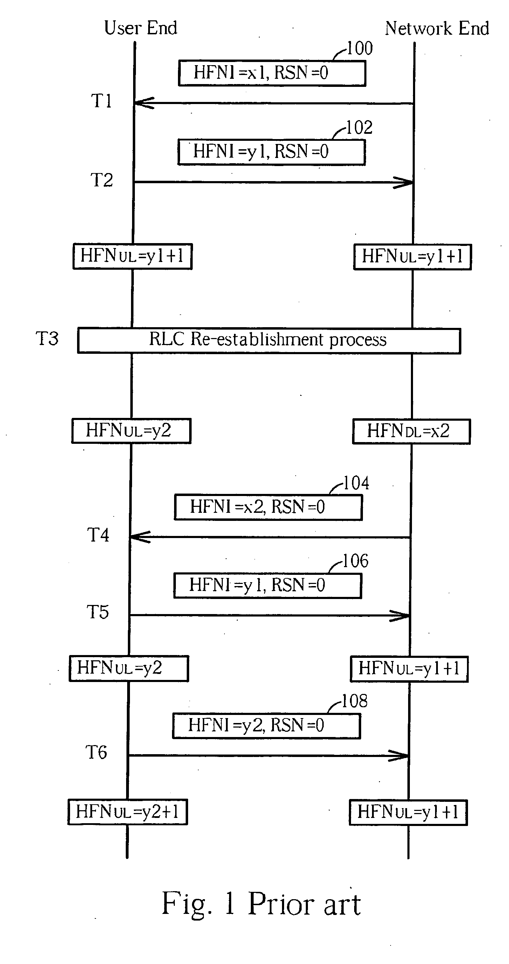

For example, please refer to Fig. 1. The transmitting end (the network end in this example) outputs a RESET PDU 100 at a time T1 for initiating a first RLC reset procedure. In the RESET PDU 100, a reset sequence number field RSN used to indicate an RSN has a value of 0, i.e. the RSN is 0, and a hyper-field number indicator field HFNI used for indicating an HFNI of a downlink has a value of x1, i.e. a downlink hyper-field number HFN_{DL} is x1. After the receiving end (the user end in this example) receives the RESET PDU 100, the receiving end responds with a RESET ACK PDU 102 at a time T2. The RESET ACK PDU 102 has an RSN value of 0, and an HFNI value of y1, i.e. an uplink hyper-field number HFN_{UL} is y1. Then, the user end resets its RLC entity, and increments the uplink hyper-field number HFN_{UL} to y1+1. When the network end receives the RESET ACK PDU 102, indicating that the first RLC Reset procedure is complete, the network end increments the uplink hyper-frame number HFN_{UL} of the user end to yl+1 to maintain synchronization of the HFNs of both ends. After the first RLC Reset procedure is complete, at a time T3, an RLC Re-establish procedure is initiated for re-establishing the RLC layer, and the RSN is reset to the initial value, i.e. 0. At a time T4, if the network end outputs a RESET PDU 104 for initiating a second RLC Reset procedure, the RSN of the RESET PDU 104 is 0, and the HFNI of the RESET PDU 104 has a value of x2. Because the RSN of the RESET PDU 104 is 0, which is the same as the RSN of the RESET PDU 100 (the last RESET PDU received by the user end), at a time T5, the prior art will only transmit one RESET ACK PDU 106 (and will not perform the corresponding reset operation). The content of the RESET ACK PDU 106 will be the same as the content of the last transmitted RESET ACK PDU 102, i.e. the RSN value will be 0 and the HFNI will have a value of y1. However, at this time, the HFN of the user end is y2. In other words, at the time T5, the uplink HFN of the user end has a value of y2. Because the RSN of the RESET PDU 104 is equal to the RSN of the RESET PDU 100, the content of the RESET ACK PDU 106 transmitted by the user end is the same as the content of the RESET ACK PDU 102 last transmitted. According to the RESET ACK PDU 106 transmitted by the user end, the network end will update the uplink HFN of the user end to have a value of y 1+1, causing the HFN of the user end and the HFN of the network end to lose synchronization. Then, because the RESET PDU 104 is the first RESET PDU received after the RLC entity of the user end is re-established, based on the prior art, at a time T6, the user end will send another RESET ACK PDU 108 having an RSN of 0 and an HFNI having a value of y2. Simultaneously, the user end resets the RLC entity, and increments the uplink HFN to y2+1. However, after the network end receives the RESET ACK PDU 108, since the network end has already received the RESET ACK PDU 106 corresponding to the RESET PDU 104, the network end will discard the RESET ACK PDU 108. In this situation, the uplink HFN of the user end will be y2+1, but the network end will continue to see the uplink HFN as y1+1, causing the HFN of the user end and the network end to lose synchronization, such that the second RLC Reset procedure cannot execute successfully.

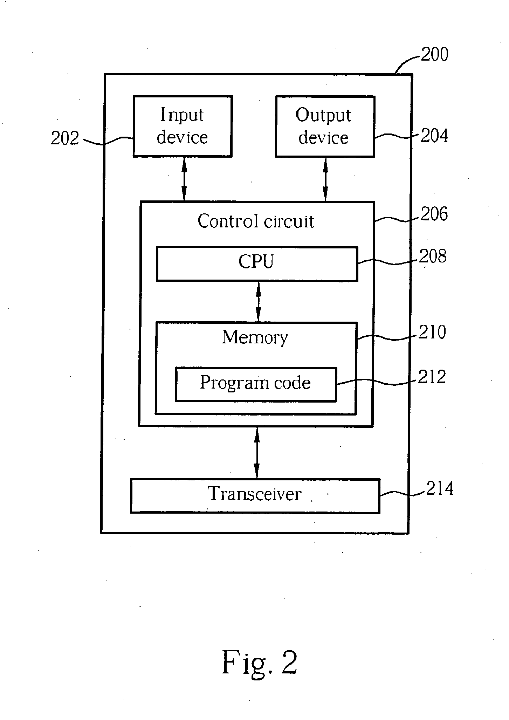

Please refer to Fig. 2, which is a functional block diagram of a communications device 200. For the sake of brevity, Fig. 1 only shows an input device 202, an output device 204, a control circuit 206, a central processing unit (CPU) 208, a memory 210, a program code 212, and a transceiver 214 of the communications device 200. In the communications device 200, the control circuit 206 executes the program code 212 in the memory 210 through the CPU 208, thereby controlling an operation of the communications device 200. The communications device 200 can receive signals input by a user through the input device 202, such as a keyboard, and can output images and sounds through the output device 204, such as a monitor or speakers. The transceiver 214 is used to receive and transmit wireless signals, delivering received signals to the control circuit 206, and outputting signals generated by the control circuit 206 wirelessly. From a perspective of a communications protocol framework, the transceiver 214 can be seen as a portion of Layer 1, and the control circuit 206 can be utilized to realize functions of Layer 2 and Layer 3.

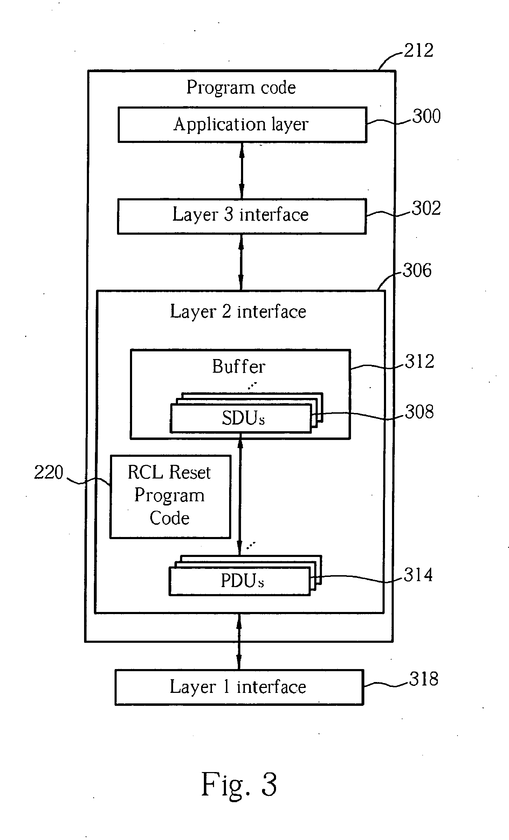

Please continue to refer to Fig. 3. Fig. 3 is a diagram of the program code 212 shown in Fig. 2. The program code 212 comprises an application layer 300, a Layer 3 interface 302, and a Layer 2 interface 306, and is coupled to a Layer 1 interface 318. When transmitting a signal, the Layer 2 interface 306 forms a plurality of service data units (SDU) 308 according to data outputted by the Layer 3 interface 302, and stores the plurality of SDUs 308 in 1 buffer 312. Then, the Layer 2 interface 306 generates a plurality of protocol data units (PDU) 314 according to the plurality of SDUs 308 stored in the buffer 312, and outputs the plurality of PDUs 314 through the Layer 1 interface 318 to a target end. In contrast, when receiving radio signals, the radio signals are received through the Layer 1 interface 318, and the received radio signals are outputted to the Layer 2 interface 306 as PDUs 314. The Layer 2 interface 306 restores the PDUs 314 to SDUs 308, and stores the SDUs 308 in the buffer 312. Finally, the Layer 2 interface 306 sends the SDUs 308 stored in the buffer 312 to the Layer 3 interface 302.

When the communications system 200 operates in AM, if the RLC entity, i.e. the Layer 2 interface 306, detects a protocol error, the RLC entity can initiate a reset procedure to recover from the protocol error. The present invention can utilize RLC Reset procedure program code 220 for detecting a retransmitted RESET PDU to maintain synchronization of the HFN of the transmitting end and the receiving end.

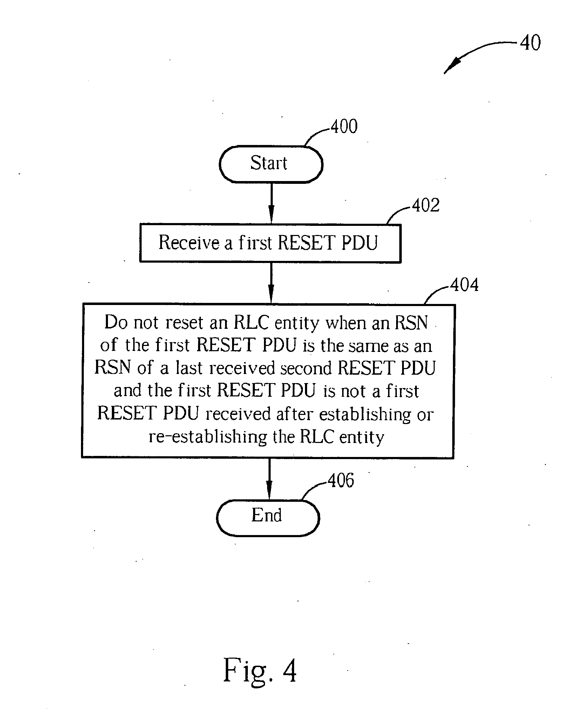

Please refer to Fig. 4, which is a diagram of a procedure 40 according to the present invention. The procedure 40 is utilized for resetting the RLC entity of a receiving end of a mobile communications system, and can be seen as the RLC Reset procedure program code 220. The procedure 40 comprises steps of:
Step 400: Start.
Step 402: Receive a first RESET PDU.
Step 404: Do not reset a radio link control (RLC) entity when a reset sequence number (RSN) of the first RESET PDU is the same as an RSN of a last received second RESET PDU and the first RESET PDU is not a first RESET PDU received after establishing or re-establishing the RLC entity.
Step 406: End.

Thus, according to the procedure 40, after the receiving end receives the first RESET PDU outputted by the transmitting end, if the RSN of the first RESET PDU is the same as the RSN of the second RESET PDU last received by the receiving end, and the first RESET PDU is not the first RESET PDU received after the RLC entity of the receiving end is established or re-established, the receiving end will not reset the RLC entity. In other words, if the RSN of the first RESET PDU received by the receiving end is the same as the RSN of the RESET PDU last received by the receiving end, and the first RESET PDU is not the first received RESET PDU after the RLC entity is established or re-established, the receiving end will not perform the RLC Reset procedure according to the first RESET PDU. Preferably, the receiving end will respond with a RESET ACK PDU having content the same as content of a RESET ACK PDU last transmitted by the receiving end. Likewise, if the RSN of the first RESET PDU received by the receiving end is different from the RSN of the RESET PDU last received by the receiver, or if the first RESET PDU is the first RESET PDU received after the RLC entity is established or re-established, the receiving end resets the RLC entity. In this situation, if the RLC Reset procedure is executed after the RLC is re-established, the RLC Reset procedure can still execute effectively.

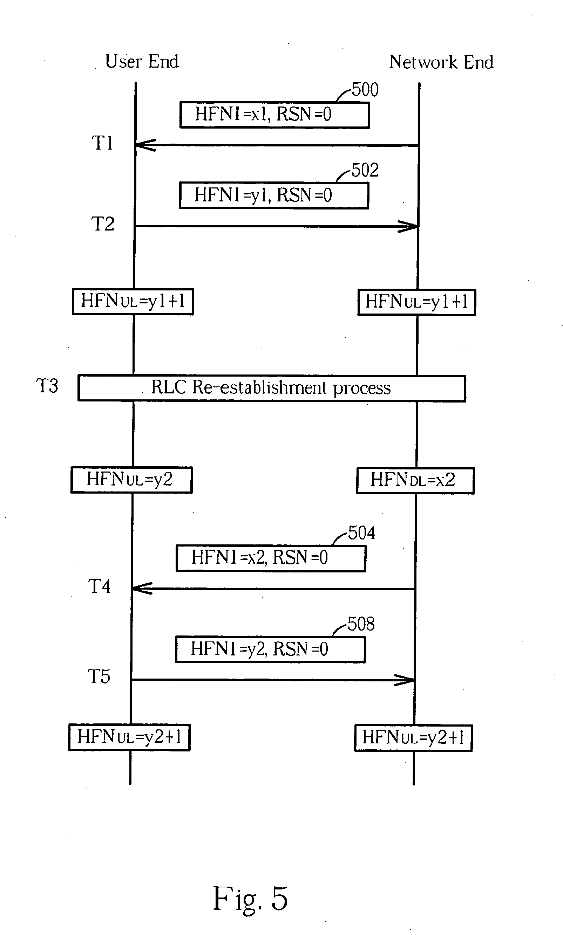

For example, please refer to Fig. 5. The transmitting end (the network end here) outputs a RESET PDU 500 at a time T1 for initiating a first RLC Reset procedure. In the RESET PDU 500, an RSN field used for indicating an RSN of the RESET PDU 500 has a value of 0, i.e. the RSN is 0, and an HFNI field used for indicating a downlink HFN has a value of x1, i.e. the downlink hyper-frame number HFN_{DL} is x1. After the receiving end (the user end here) receives the RESET PDU 500, the receiving end responds with a RESET ACK PDU 502 at a time T2. The RESET ACK PDU 502 has an RSN of 0, and an HFN having a value y1 (the uplink hyper-field number HFN_{UL} is y1). Then, the user end resets the RLC entity, and increments the uplink hyper-field number HFN_{UL} to y1+1. When the network end receives the RESET ACK PDU 502, it means that the first RLC Reset procedure is complete, and the network end increments the uplink hyper-field number HFN_{UL} to y1+1, in order to keep the HFNs of each side synchronized. After the first RLC Reset procedure is completed, at a time T3, an RLC Re-establish procedure is started for re-establishing the RLC layer, and the RSN is reset to its initial value, i.e. 0. At a time T4, if the network end outputs a RESET PDU 504 utilized for starting a second RLC Reset procedure, the RSN of the RESET PDU 504 is 0, and the HFN is a value x2. Because the RESET PDU 504 is the first RESET PDU received since the RLC layer of the user end was re-established, according to the present invention, at a time T5, the user end will transmit a RESET ACK PDU 508 having an RSN of 0 and an HFN having a value y2. Simultaneously, the user end resets the RLC entity, and increments the uplink hyper-frame number HFN_{UL} to y2+1. When the network end receives the RESET ACK PDU 508, it means that the second RLC Reset procedure is complete, and the network end increments the uplink hyper-frame number HFN_{UL} to y2+1, in order to maintain synchronization of the HFNs of each end.

Please refer to Fig. 5 in comparison with Fig. 1. In Fig. 1, because the RSN of the RESET PDU 104 is the same as the RSN of the RESET PDU 100, and the RESET PDU 104 is the first RESET PDU received after the RLC entity of the user end was re-established, the prior art responds with the RESET ACK PDUs 106 and 108 at the times T5 and T6, respectively, causing the transmitting end to discard the RESET ACK PDU 108, such that the HFNs of the two sides lose synchronization, affecting performance of the RLC Reset procedure. By comparison, in the present invention, if the RSN of the RESET PDU received by the receiving end is the same as the RSN of the last RESET PDU received by the receiving end, and if the RESET PDU received by the receiving end is not the first RESET PDU received after the RLC entity is established or re-established, the receiving end will not perform resetting according to the RESET PDU. In addition, when the RSN of the RESET PDU received by the receiving end is not the same as the RSN of the last RESET PDU received, or the RESET PDU is the first RESET PDU received after the RLC entity is established or re-established, the receiving end will reset its RLC entity. Thus, in Fig. 5, the user end will not output another RESET ACK PDU after the time T5. In this way, the HFNs of both ends can be synchronized, and effective operation of the RLC Reset procedure is ensured.

In summary, the present invention does not reset the RLC entity when the RSN of the RESET PDU received by the receiving end is the same as the RSN of the last RESET PDU received and the RESET PDU received is not the first RESET PDU received after the RLC entity is established or re-established. Thus, the present invention can prevent loss of synchronization of the HFNs of the receiving end and the transmitting end, and ensure effective operation of the RLC Reset procedure.

## Claims

1. A method of resetting a radio link control entity (306) in a receiving end of a wireless communications system comprising:
receiving a first reset protocol data unit (RESET PDU); (402)
**characterized by** not resetting a radio link control (RLC) entity when a reset sequence number (RSN) of the first RESET PDU is the same as an RSN of a last received second RESET PDU and the first RESET PDU is not a first RESET PDU received after establishing or re-establishing the RLC entity (404).

2. A communications device (200) utilized in a wireless communications system for preventing errors from occurring during resetting of a radio link control entity, the communications device comprising:
a control circuit (206) for realizing functions of the communications device;
a central processing unit (208) installed in the control circuit for executing a program code (212) to operate the control circuit; and
a memory (210) installed in the control circuit and coupled to the central processing unit for storing the program code;
**characterized by** the program code receiving a first reset protocol data unit (RESET PDU), and not resetting a radio link control (RLC) entity when a reset sequence number (RSN) of the first RESET PDU is the same as an RSN of a last received second RESET PDU and the first RESET PDU is not a first RESET PDU received after establishing or re-establishing the RLC entity.

3. The method of claim 1 and the communications device of claim 2, **characterized in that** re-establishing the RLC entity comprises re-establishing a receiving side and a transmitting side of the RLC entity.

4. The method of claim 1 and the communications device of claim 2, **characterized in that** re-establishing the RLC entity comprises re-establishing a receiving side or a transmitting side of the RLC entity.

5. The method of claim 1 and the communications device of claim 2 **characterized by** outputting a reset acknowledgement PDU (RESET ACK PDU) having the same content as a last transmitted RESET ACK PDU.

6. The method of claim 1 and the communications device of claim 2 **characterized by**:
receiving a third RESET PDU; and
resetting the RLC entity when an RSN of the third RESET PDU is not the same as an RSN of the last received second RESET PDU or the third RESET PDU is a first RESET PDU received after establishing or re-establishing the RLC entity.
